# EUROPEAN PATENT APPLICATION

(11) **EP 4 180 494 A1**
(43) Date of publication of application: **17.05.2023**
(21) Application number: 21841366.4
(22) Date of filing: 09.07.2021
(51) Int. Cl.: C09J 167/00, C09J 171/12, C09J 7/30

(54) **ADHESIVE RESIN COMPOSITION AND ADHESIVE FILM**

(30) Priority: 13.07.2020 JP 2020119615
(71) Applicant: NIPPON STEEL Chemical & Material Co., Ltd., Tokyo 103-0027 (JP)
(72) Inventor: YOSHIOKA Takahiro, Tokyo 103-0027 (JP); TAKAHASHI Hiroyuki, Tokyo 103-0027 (JP)
(74) Representative: Becker, Eberhard
(86) International application number: PCT/JP2021/025997
(87) International publication number: WO 2022/014503

(57) **Abstract**

An adhesive resin composition for bonding two adherends of different materials together, the composition comprising a phenoxy resin and a polyester elastomer at a weight ratio (phenoxy resin : polyester elastomer) ranging from 20:80 to 80:20, wherein the area of portions where solid matter forms a phase separation structure attributed to both of the phenoxy resin and the polyester elastomer is at most 1 area% of an entire observation area in an elastic modulus phase image of a plurality of arbitrarily defined 10-µm square regions observed by an atomic force microscope (AFM) to which a probe having a tip radius of curvature of 10 nm at 25°C is attached.

## Description

### Technical Field

The invention relates to an adhesive resin composition used when two materials, such as a resin material and a metal material, are adhered, and an adhesive film using the adhesive resin composition.

### Related Art

Many industrial products are composed of various materials such as metals, resins, ceramics, etc. The components made of these different materials are molded into desired shapes in advance, and then joined and integrated by using joining members, such as screws rivets, etc. (see Patent Document 1, Patent Document 2).

However, in the joining using a mechanical joining member, such as a screw, a rivet, the process for joining, such as drilling, is complicated, and stress may tend to concentrate on the joining part.

Meanwhile, adhesive joining using curable resins such as epoxy resins is simple and does not require a mechanical joining member, so the design of the product is favorable. Thus, in recent years, adhesion has been frequently put into use to join two or more members.

Furthermore, attempts have been made to pursue a light weight of materials and products from the perspective of resource and energy conservation in recent years. In the automotive industry, in particular, actions have been taken actively to reduce the weight of vehicle bodies and facilitate fuel efficiency and driving performance.

In this field, simple replacement of conventional metal members with resin members (especially members made of fiber-reinforced plastics) has been considered. Besides, the design of members also known as "multi-materialization", in which a metal member and a resin member are assembled (for example, by "adhesive bonding" the two members together) to take advantage of the features of both members, has also been widely considered.

As an example of exploring such multi-materialization, Patent Document 3 discloses a method for manufacturing a joint panel by bonding an aluminum alloy outer panel and a fiber-reinforced plastic inner panel with an adhesive.

However, when an adhesive is used in such scenario, it takes a long time for the adhesive to cure. Moreover, since the adherends are made of materials having different linear expansion coefficients, it is possible that a residual stress, for example, may cause a problem of peeling off due to application of an external force.

In addition, Patent Document 4 discloses a joined body of a metal member and a CFRP member using an epoxy resin including an elastomer component. However, in the joined body of Patent Document 4, the joining strength is secured by fine irregularities formed through performing chemical etching on the surfaces of the metal member. The elastomer component is added as fine particles, and the role of the elastomer component is simply to alleviate the linear expansion coefficients or the temperature impact of the metal member and the CFRP member.

### Citation List

### Patent Literature

[Patent Document 1] Japanese Laid-open No. 2008-111536
[Patent Document 2] Japanese Laid-open No. 2015-175460
[Patent Document 3] Japanese Laid-open No. 2015-196326
[Patent Document 4] Japanese Laid-open No. 2009-241569

### SUMMARY OF INVENTION

### Technical Problem

An objective of the invention is to provide an adhesive resin composition allowing strong adhesion against both shearing and peeling forces when adhering two materials such as a resin material and a metal material.

### Solution to Problem

In order to solve the above issues, as a result of intensive research, the inventors have found that an adhesive resin composition containing a phenoxy resin and a polyester elastomer at a predetermined ratio can exhibit excellent adhesion when adhering two materials, and have completed the invention.

That is, an adhesive resin composition of the invention is an adhesive resin composition for adhering two adherends. The adhesive resin composition contains a phenoxy resin and a polyester elastomer at a weight ratio ranging from 20:80 to 80:20 between the phenoxy resin and the polyester elastomer.

An area of portions where solid matter of the adhesive resin composition forms a phase separation structure attributed to both of the phenoxy resin and the polyester elastomer is 1 area% or less of an entire observation area in an elastic modulus phase image of a plurality of arbitrarily defined 10-µm square regions observed by an atomic force microscope (AFM) to which a probe having a tip radius of curvature of 10 nm is attached at 25°C.

In the adhesive resin composition of the invention, the solid matter of the adhesive resin composition may also satisfy (a) to (c) as follows:
(a) a glass transition temperature of 60°C or lower;
(b) a tensile modulus of 2500 MPa or less; and
(c) a tensile break elongation of 5% or more

In the adhesive resin composition of the invention, the phenoxy resin may be a phenoxy resin that is amorphous and has a bisphenol A skeleton having a glass transition temperature of 120 °C or lower, and the polyester elastomer may be a polyester elastomer having a melting point of 180°C or less.

In the adhesive resin composition of the invention, one of the two adherends may be a resin material, and an other of the two adherends may be a metal material.

An adhesive film according to the invention consists of the adhesive resin composition according to any of the above.

### Effects of Invention

According to the adhesive resin composition of the invention, two materials, such as dissimilar materials like a resin material and a metal material, can be firmly adhered. By using the adhesive resin composition of the invention, it is possible to obtain an adhesion structure exhibiting strong adhesive strength against both shearing and peeling forces. In addition, since the adhesive resin composition is thermoplastic, adhesion can be achieved within a short time compared to conventional thermosetting resin-based adhesives.

### BRIEF DESCRIPTION OF DRAWINGS

FIG. 1 is an elastic modulus phase image diagram of a resin composition of Example 2 by AFM.
FIG. 2 is an elastic modulus phase image diagram of a resin composition of Comparative Example 2 by AFM.
FIG. 3 is an elastic modulus phase image diagram of a resin composition of Comparative Example 3 by AFM.

### DESCRIPTION OF EMBODIMENTS

In the following, an adhesive resin composition, an adhesive film, and an adhesion structure of the embodiments of the invention are described in detail.

### <Adhesive resin composition>

The adhesive resin composition of the embodiment is a resin composition including, as required components, a phenoxy resin and a polyester elastomer.

The phenoxy resin according to the invention is an amorphous thermoplastic resin obtained through a condensation reaction between a dihydric phenol compound and epihalohydrin, or a polyaddition reaction between a dihydric phenol compound and a bifunctional epoxy resin. The phenoxy resin can be obtained in a solution or without a solvent through a conventional process. The phenoxy resin may also referred to as a polyhydroxy polyether resin, a thermoplastic epoxy resin, etc.

The average molecular weight of the phenoxy resin, in mass-average molecular weight (Mw), is generally within the range of 10,000 to 200,000, preferably within the range of 20,000 to 100,000, more preferably within the range of 30,000 to 80,000. When Mw is excessively low, the strength of the adhesive resin composition tends to deteriorate, and when Mw is excessively high, the workability or the processability tends to deteriorate. Mw is a value measured by gel permeation chromatography (GPC) and converted using a standard polystyrene calibration curve.

The hydroxyl group equivalent (g/eq) of the phenoxy resin is generally within the range of 50 to 1000, preferably within the range of 50 to 750, and particularly preferably within the range of 50 to 500. When the hydroxyl group equivalent is excessively low, the hydroxyl groups increase and the water absorption rate increases, so there is a concern that the mechanical properties may deteriorate. When the hydroxyl group equivalent is excessively high, the hydroxyl groups decrease. Therefore, the adhesion to metal materials in particular deteriorates.

The glass transition temperature (Tg) of the phenoxy resin is suitable, for example, within the range of 65 °°C to 160 °C, and preferably within the range of 70°C to 150°C. If the glass transition temperature is lower than 65 °C, moldability is improved, but an issue that deterioration of powder or pellet storage stability due to blocking and stickiness (poor tackiness) during preforming occurs. If the glass transition temperature is higher than 160°C, the processing temperature increases, and the workability tends to deteriorate. Moreover, when the glass transition temperature exceeds 160°C, the resin viscosity increases and the adhesive strength decreases. The glass transition temperature is more preferably 120° C or lower. The glass transition temperature of the phenoxy resin is a numerical value measured in the range of 20°C to 280°C under a temperature rising condition of 10 °C/min by using a differential scanning calorimeter (DSC) and obtained from the peak value of a second scan.

Although the phenoxy resin is not particularly limited as long as it satisfies the above physical properties, examples may include: bisphenol A-type phenoxy resin (e.g., the products in the name of PhenoTohto YP-50, YP-50S, YP-55U manufactured by NIPPON STEEL Chemical & Material Co., Ltd.), bisphenol F-type phenoxy resin (e.g., the product in the name of PhenoTohto FX-316 manufactured by NIPPON STEEL Chemical & Material Co., Ltd.), copolymer-type phenoxy resin of bisphenol A and bisphenol F (e.g., the product in the name of YP-70 manufactured by NIPPON STEEL Chemical & Material Co., Ltd.), or special phenoxy resin (for example, the products in the names of PhenoTohto YPB-43C, FX293, etc., manufactured by NIPPON STEEL Chemical & Material Co., Ltd.). The above can be used solely or in mixture of two types or more.

Among the phenoxy resins, the bisphenol A-type phenoxy resin or the copolymer-type phenoxy resin of bisphenol A and bisphenol F are more preferably used.

The polyester elastomer in the invention refers to a thermoplastic polyester block copolymer exhibiting rubber-like elasticity and containing, as structural units, a hard segment (crystalline phase) including a polyester unit and a soft segment (amorphous phase) containing a polyether unit and/or a polyester unit.

The polyester unit as the hard segment is preferably an aromatic polyester, such as polybutylene terephthalate, polyethylene terephthalate, polyethylene naphthalate, and a mixture thereof. The polyether unit and/or polyester unit as the soft segment are aliphatic polyethers, aliphatic polyesters, aliphatic polycarbonates, etc., and examples include polytetramethylene glycol or polylactone, polydimethyltrimethylene carbonate, etc.

The thermoplastic polyester block copolymer can be manufactured through a conventional process. For example, a process of subjecting an ester-forming derivative such as aromatic dicarboxylic acid and/or lower alkyl diester of aromatic dicarboxylic acid as a component serving as the hard segment (hereinafter referred to as "hard segment component"), excess diol (low molecular weight glycol), and aliphatic polyether and/or aliphatic polyester as a component serving as the soft segment (hereinafter referred to as "soft segment component") to a transesterification reaction in the presence of a catalyst, and subjecting an obtained reaction product to polycondensation may serve as an example.

How the hard segment and the soft segment are present in the polyester elastomer is not particularly limited. It may be a complete block in which a soft segment end is bonded to a hard segment end, a block-random in which a random portion is bonded to a block end, a random block in which a block portion is randomly present, or a mixture thereof. Further, a polyester elastomer polymerized with a ratio between the hard segment component and the soft segment component (hard segment component/soft segment component; hereinafter referred to as "hard/soft ratio") in a range of 1/99 to 50/50 is preferable. With the hard/soft ratio falling within the range, the polyester elastomer can be uniformly mixed with the phenoxy resin in a wide compounding ratio.

The polyester elastomer preferably has a melting point of 180° C or lower and a tensile break elongation of 500% or higher, more preferably a melting point of 170° C or lower and a tensile break elongation of 600% or higher. If the melting point exceeds 180 °C, the workability deteriorates, and if the tensile break elongation is below 500%, the flexural adhesive strength of the adhesion structure is lowered when the adhesion structure is manufactured by using dissimilar materials.

The melting point of the polyester elastomer in the invention refers to a value measured by a differential scanning calorimeter (DSC).

The polyester elastomer is not particularly limited, and commercially available products can be used, but a polyester-polyether type polyester elastomer is preferred. It is presumed that, in the polyester-polyether type elastomer, the chemical structure of the polyether component (e.g., polytetramethylene glycol, etc.) composing the soft segment is close to phenoxy resin, and is easily compatible with phenoxy resin without phase separation from each other under a wide compounding ratio. Examples of such polyester elastomer include P-type PELPRENE (product name) manufactured by Toyobo Co., Ltd. and Hytrel (product name) manufactured by DU PONT-TORAY CO., LTD.

As a component composing the adhesive resin composition of the embodiment, an optional component may be included in addition to the phenoxy resin and the polyester elastomer. Examples of preferred optional components include, for example, polyvinyl chloride, polystyrene, ABS resin, acrylic resin, polyethylene, polypropylene, polycarbonate, polyphenylene ether, polyamides such as nylon 6 or nylon 610, polyacetal, polyesters such as polyethylene terephthalate and polybutylene terephthalate, and thermoplastic resins such as polyphenylsulfone, polysulfone, polyarylate, polyetherimide, polyetheretherketone, polyphenylene sulfide, polyamideimide, and polyimide. The adhesive resin composition may further contain optional components such as a flame retardant, an inorganic filler, a colorant, an antioxidant, a UV inhibitor, a plasticizer, a cross-linking agent, a colorant, a solvent, etc., depending on the purpose.

At this time, the total weight ratio of the phenoxy resin and the polyester elastomer to the total weight of the resin components in the adhesive resin composition is preferably 70% or more, more preferably 90% or more. When the total weight ratio of the phenoxy resin and the polyester elastomer is less than 70%, it becomes difficult to develop desired properties.

The adhesive resin composition can be prepared by mixing the phenoxy resin, the polyester elastomer, and optional components as needed.

The phenoxy resin is a resin containing a hydroxyl group and having a repeating unit composed of an ether group. The polyester elastomer is a thermoplastic polyester block copolymer containing, as structural units, a hard segment (crystalline phase) including a polyester unit and a soft segment (amorphous phase) containing a polyether unit and/or a polyester unit. Therefore, although the phenoxy resin and the polyester elastomer are dissimilar polymers, it is presumed that the compatibility in terms of polarity and structure between the phenoxy resin and the polyester elastomer is high. Therefore, although dissimilar polymers are generally not compatible with each other only by kneading, the phenoxy resin and the polyester elastomer can be mixed easily and uniformly without special means or equipment, just like polymers of the same type. Therefore, the process of mixing the phenoxy resin, the polyester elastomer and other components is not particularly limited, and conventional processes can be used. Examples of such process include a process of dissolving each component by using a solvent to form a varnish and blending the components by using a stirring/mixing device such as a propeller mixer or a rotation-revolution defoaming stirrer, or a process of melt-kneading the respective components by using a kneader or an extruder. Among the processes, melt-kneading is preferable as a process for uniformly mixing the respective components, and melt-kneading using a twin screw extruder is further preferable. In the case where the mixed state of the phenoxy resin and the polyester elastomer is not uniform (e.g., when phase separation results in a domain structure like a sea-island), when a shear or peeling load is applied, the load is concentrated on the portion that is not uniform and a high adhesive strength is not exhibited. However, by uniformly mixing the phenoxy resin and the polyester elastomer, it is possible to achieve both the high shear adhesive strength of the phenoxy resin and the excellent vertical peel adhesive strength of the polyester elastomer.

The weight ratio between the phenoxy resin and the polyester elastomer in the adhesive resin composition of the embodiment is within the range of 20:80 to 80:20, preferably within the range of 25:75 to 50:50. When the weight ratio of the phenoxy resin is higher than 80% and the weight ratio of the polyester elastomer is lower than 20%, the tensile shear adhesive strength increases but the flexural adhesive strength decreases. Comparatively, when the weight ratio of the phenoxy resin is lower than 20% and the weight ratio of the polyester elastomer is higher than 80%, the flexural adhesive strength increases but the tensile shear adhesive strength decreases.

The glass transition temperature of the adhesive resin composition of the embodiment is preferably 60 °C or lower (condition a), more preferably 10 °C or lower. If the glass transition temperature is 60 °C or lower, a strong adhesive strength is exhibited even when a strong load that deforms the shape of the adhesion surface is applied. For the same reason, the solid matter of the adhesive resin composition of the embodiment preferably has a tensile modulus of 2500 MPa or less (condition b), more preferably 1000 MPa or less. Similarly, the tensile break elongation in a solid state is preferably 5% or more (condition c), more preferably 100% or more.

If any one of the above conditions a to c is not satisfied, it may be difficult to achieve both the tensile shear adhesive strength and the flexural adhesive strength of the adhesion structure produced by dissimilar materials prepared by using the adhesive resin composition of the embodiment.

The adhesive resin composition of the embodiment is characterized in that, in a 10 µm×10 µm area of the surface of the solid matter thereof, no or substantially no phase separation structure due to both of the phenoxy resin and the polyester elastomer is observed in an elastic modulus phase image.

Here, the expression "due to both the phenoxy resin and the polyester elastomer" excludes the phase separation structure due to the phenoxy resin itself or the polyester elastomer itself.

The elastic modulus phase image can be observed with an atomic force microscope (AFM). Specifically, after performing a surface leveling to smooth the surface of the adhesive resin composition by using cryomicrotome (-40 °C), etc., by using a Dimension Icon type AFM of Bruker-AXS in which an NCHV probe (tip curvature radius 10 nm, spring constant 42 N/m) of Bruker-AXS is set, the adhesive resin composition can be observed through scanning in a tapping mode. When the adhesive resin composition of the embodiment is observed in the range of 10 µm×10 µm under the condition of 25 °C by using such method, a uniform image without brightness/darkness due to difference in elastic modulus between the phenoxy resin and the polyester elastomer is formed, and a clear pattern of spots or stripes (phase-separated structure) seen in a sea-island structure or co-continuous structure is not observed or substantially not observed. More specifically, in a total area of multiple arbitrary 10-µm square observation areas in multiple samples, the portions where the phase separation structure is observed are 1 area % or less of the total area of the observation area, preferably 0.1 area % or less, and more preferably 0 area % (i.e., no phase separation structure observed).

The observation by using AFM is performed at at least 10 or more positions in each of at least 2 or more samples (20 or more view fields in total), preferably, 10 or more positions in each of 5 or more samples (50 or more view fields in total), more preferably 10 or more positions in each of 10 samples (100 or more view fields in total). More specifically, for example, 2 to 5 samples may each be observed at 10 positions (20 to 50 view fields in total), or 5 to 10 samples may each be observed at 10 positions (50 to 100 view fields in total).

Since substantially no phase separation structure of the phenoxy resin and the polyester elastomer is observed, it is considered that the phenoxy resin and the polyester elastomer are dispersed substantially homogeneously within the range of the weight ratio of 20:80 to 80:20 in the adhesive resin composition of the embodiment. Therefore, it is presumed that the adhesive resin composition of the present embodiment achieves both high tensile shear adhesive strength due to the phenoxy resin and high flexural adhesive strength due to the polyester elastomer.

The adhesive resin composition of the embodiment may be in various forms such as solid, powder, and liquid. For example, the adhesive resin composition may be varnished by using a solvent, or adhesive resin composition may be used after being powdered, but the adhesive resin composition is preferably used in the form of a film as an adhesive film from the perspective of handling properties.

### <Adhesive film>

There is no particular limitation on the process for forming a film from the adhesive resin composition of the embodiment, and a conventional process may be used. Examples of such process include a melt extrusion molding process, a solution casting molding process, a calendering process, etc.

The adhesive film according to the embodiment has a thickness in the range of 5 to 500 micrometers, for example. A film having a thickness in a range of 5 to 250 micrometers is preferred, and a film having a thickness in a range of 10 to 100 micrometers is more preferred.

The adhesive resin composition and the adhesive film of the embodiment are suitably used for bonding two adherends made of the same or different materials. An adhesion structure adhered by using the adhesive resin composition or the adhesive film of the invention will be described below.

### <Adhesion structure>

The adhesion structure of the embodiment includes a first member, a second member same as or dissimilar from the first member, and an adhesive resin layer interposed between the first member and the second member, and the adhesive resin layer is composed of the adhesive resin composition or the adhesive film. That is, the adhesion structure is obtained by adhering two adherends of the same or dissimilar types by using an adhesive resin composition or an adhesive film.

The shapes and sizes of the adherends are not particularly limited. For example, the adherends may be plate-shaped or three-dimensional, or the adherends may be shaped into desired shapes in advance. The shapes and sizes of the first member and the second member may also be different.

The two adherends of the adhesion structure may be metal members or resin members, for example, made of the same type of materials. However, it is preferable that one of the adherends is made of a resin material and the other is made of a dissimilar material other than the resin material (hereinafter simply referred to as "dissimilar material"). In the adhesion structure adhered by using the adhesive resin composition or the adhesive film of the embodiment, the two adherends are strongly adhered. For example, although the tensile shear adhesive strength of the adhesion structure of the resin material and the metal member is limited by processing conditions due to the Tg or the thermal deformation temperature of the resin material, the tensile shear adhesive strength is preferably 5.0 MPa or more, more preferably 10.0 MPa or more when adhered at a temperature of at least 160 °C or more and a pressure of 5 MPa for 5 minutes. Regarding the flexural adhesive strength, the adhesive strength is preferably 0.25 MPa or more, more preferably 0.50 MPa or more when adhered under the same conditions.

It is not necessarily the case that either the tensile shear adhesive strength or the flexural adhesive strength of the adhesion structure should be high, but it is preferable that the tensile shear adhesive strength and the flexural adhesive strength are balanced. For the purpose of being balanced, although it depends on the configuration of the adhesion structure, the numerical value obtained by multiplying the numerical values of the tensile shear adhesive strength and the flexural adhesive strength exceeds 1.5, preferably 2.0 or more, and, if the resin material is a fiber reinforced material, 4.0 or more and preferably 20 or more.

A practically preferable example of the adhesion structure formed of dissimilar materials is one formed of a fiber-reinforced plastic material and a metal member, and in particular, a combination of a fiber-reinforced plastic material containing a phenoxy resin and a metal member is preferable. In such case as well, the tensile shear adhesive strength of the adhesion structure is preferably 5.0 MPa or more, more preferably 10.0 MPa or more, and the flexural adhesive strength is preferably 0.25 MPa or more, more preferably 0.50 MPa or more, and as processing conditions, it is preferable to carry out the processing at a temperature of at least 220° C or higher and a pressure of 4 MPa for 5 minutes.

The tensile shear adhesive strength is an index of shear adhesive strength that can be measured with reference to JIS K6850, and the flexural adhesive strength is an index of peel adhesive strength that can be measured with reference to JIS K6856 (Method A).

The resin material is a material made of synthetic resin or plastic. Examples of the resin material may include, for example, as thermoplastic resins: polypropylene, polyethylene, polybutylene terephthalate, polyacetal, polyethylene terephthalate, polyphenylene sulfide, polyether ether ketone, polystyrene, ABS resin, acrylic resin, polycarbonate, polyphenylene ether, polyether sulfone, liquid crystal polymer, polyetherimide, polyamide-imide, polyimide, etc., and as thermosetting resins: polyurethane, phenol resin, urea resin, melamine resin, epoxy resin, unsaturated polyester resin, etc.

The resin material may be reinforced with a filler. Examples of the filler may include, for example, silica, talc, mica, clay, iron powder, aluminum powder, alumina, aluminum nitride, boron nitride, calcium carbonate, barium sulfate, aluminum hydroxide, magnesium hydroxide, titanium oxide, iron oxide, carbon black, carbon fiber, boron fiber, silicon carbide fiber, glass fiber, aramid fiber etc. In particular, those reinforced by a reinforcing fiber base material such as carbon fiber, boron fiber, silicon carbide fiber, glass fiber, or aramid fiber are preferred.

In the following, the dissimilar material is described. The dissimilar material of the invention indicates a material other than the resin material. Examples of the dissimilar material include, for example, metal materials such as pure metals like iron, copper, aluminum, titanium and magnesium or alloys like stainless steel, duralumin, brass, titanium alloys, magnesium alloys, surface-treated materials such as those whose surfaces are plated with zinc, glass, cement, ceramics, wood, etc. In particular, an adhesion structure containing a resin material and a metal material including a surface plating material has a wide range of industrial application and is very useful.

Examples of a particularly preferable combination of a resin material and a dissimilar material include, for example, a combination in which the resin material is a fiber-reinforced plastic and the dissimilar material is a steel plate. In such case, as the matrix resin in the fiber-reinforced plastic, those containing a resin having a high affinity with the adhesive resin composition or the adhesive film to be used are preferred. For example, a phenoxy resin, an epoxy resin, a polyester resin, a polyamide resin, a polycarbonate resin, etc., may be used as the matrix resin. A phenoxy resin is particularly preferable, and it is most preferable that the matrix resin of the fiber-reinforced plastic contains 20 wt% or more of the phenoxy resin.

As a process for producing the adhesion structure, a process in which the adhesive resin composition or the adhesive film is disposed between the resin material and the dissimilar material, the adhesive resin composition is softened by heating, and the resin material and the dissimilar material are crimped may serve as an example. Specifically, examples include a process of heating and crimping at once by using a heat compression press machine, a process of crimping by using heat generated by pressing a jig that rotates at high speed or a jig that generates ultrasonic waves, a process in which the adhesive resin composition or the adhesive film is sandwiched by the resin material and/or the dissimilar material heated advance on a hot plate, a hot air oven, a halogen heater, an infrared heater, etc., and crimped. The processing condition is preferably, for example, a heating temperature of 150 to 300° C, a pressure of 0.5 to 5 MPa, and a time of 1 to 20 minutes. More preferably, the heating temperature is 150 to 250° C, the pressure is 1 to 4 MPa, and the time is 1 to 10 minutes.

As described above, by using the adhesive resin composition or the adhesive film of the embodiment, the resin material is adhered to the dissimilar material such as a metal material, and an adhesion structure that is strong against both shearing and peeling forces can be obtained. The adhesion structure so manufactured can be suitably used not only as a housing for electrical and electronic equipment, but also as a structural member for the purposes of civil engineering and construction members, automobile members, aircraft members, etc.

### [Example]

The invention will be described in more detail with reference to examples below, but the invention shall not be construed as being limited to the description of the examples. The methods of testing and measuring various physical properties in Examples and Comparative Examples are as follows.

### <Method for evaluating adhesive resin composition>

### (Glass transition temperature, melting point)

Measurement was made according to JIS K7121 (transition temperature measurement method for plastics). Those whose specific melting point cannot be measured, such as amorphous resins, were indicated as "ND". In addition, in the case where two glass transition temperatures were observed, the lower one was set as the glass transition temperature.

### (Tensile modulus, tensile break elongation)

Measurement was made according to JIS K6251 (vulcanized rubber and thermoplastic rubber - determination of tensile properties) A dumbbell-shaped No. 5 test piece was used. However, the tensile modulus conformed to JIS K7161 (plastics - how to determine tensile properties). The measurement was performed in an environment at 25 °C using a Tensilon universal testing machine RTF-2410 manufactured by A&D Company, Limited. The physical properties of the phenoxy resin alone (Comparative Example 1) and the physical properties of the mixture of the phenoxy resin and polyethylene terephthalate (Comparative Example 3) were measured according to JIS K7161.

### (Observation of elastic modulus phase image by AFM)

After performing a surface leveling to smooth a cross-section (with a diameter of about 3mm) of a resin pellet by using cryomicrotome (-40 °C), by using a Dimension Icon type AFM of Bruker-AXS in which a NCHV probe (tip curvature radius 10 nm, spring constant 42 N/m) of Bruker-AXS was set, an area of 10 µm×10 µm was observed through scanning in a tapping mode under the condition of 25° C.

At the time of observing the elastic modulus phase image, by using 10 individual resin pellets, observations were made on 10 arbitrary view fields per resin pellet sampled at a stage when the manufacturing conditions were stable. The case where a pattern of spots or stripes (phase-separated structure) due to the phenoxy resin and the polyester elastomer is 1 area % or less of the total observation area was evaluated as "o" (Good), and the case where such pattern was greater than 1 area % was evaluated as "×" (Defective).

### <Method for evaluating adhesion structure>

### (Tensile shear adhesive strength)

Measurement was made with reference to JIS K6850 (adhesives - test method for tensile shear adhesive strength of rigid adherends). The measurement was carried out in an environment at 25°C, and, since the thicknesses of the resin materials and/or the dissimilar materials that were evaluated were different among the materials, backing plates of different thicknesses were used to correctly apply loads to the adhesion surfaces.

### (Flexural adhesive strength)

Measurement was made with reference to Method A of JIS K6856 (method for testing flexural adhesive strength of adhesives). A jig where the load part tip is R5 and the support base tip is R5 was used. In addition, the measurement was carried out in an environment at 25 °C.

### [Example 1]

After dry-blending the phenoxy resin A (Product name: PhenoTohto YP50S, manufactured by Nippon Steel Chemical & Material Co., Ltd., glass transition temperature 84° C.) and the polyester elastomer B (Product name: Hytrel BD406, manufactured by DU PONT-TORAY CO., LTD., melting point 142°C) at a former/latter weight ratio of 80/20, by performing melt-kneading using a co-rotating twin screw extruder with a screw diameter of 26 mm (set temperature: 200°C), a resin composition 1 was obtained. Evaluation results of the obtained resin composition 1 are shown in Table 1.

### [Example 2]

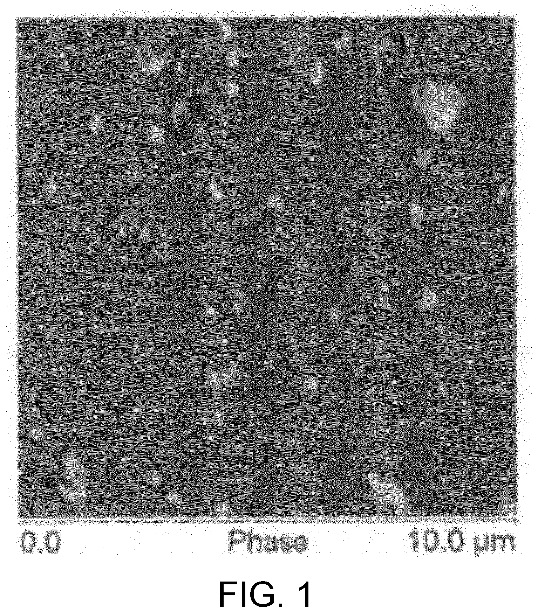

By applying the same setting as Example 1 except that the phenoxy resin A and the polyester elastomer B were set with a weight ratio of 67/33, a resin composition 2 was obtained. Evaluation results of the obtained resin composition 2 are shown in Table 1, and observation results of the elastic modulus phase image by AFM are shown in FIG. 1.

### [Example 3]

By applying the same setting as Example 1 except that the phenoxy resin A and the polyester elastomer B were set with a weight ratio of 60/40, a resin composition 3 was obtained. Evaluation results of the obtained resin composition 3 are shown in Table 1.

### [Example 4]

By applying the same setting as Example 1 except that the phenoxy resin A and the polyester elastomer B were set with a weight ratio of 40/60, a resin composition 4 was obtained. Evaluation results of the obtained resin composition 4 are shown in Table 1.

### [Example 5]

By applying the same setting as Example 1 except that the phenoxy resin A and the polyester elastomer B were set with a weight ratio of 33/67, a resin composition 5 was obtained. Evaluation results of the obtained resin composition 5 are shown in Table 1.

### [Example 6]

By applying the same setting as Example 1 except that the phenoxy resin A and the polyester elastomer B were set with a weight ratio of 20/80, a resin composition 6 was obtained. Evaluation results of the obtained resin composition 6 are shown in Table 1.

### [Example 7]

After dry-blending the phenoxy resin A, the polyester elastomer B, an antioxidant 1 (phenol-based antioxidant, product name: ADEKA STAB AO-80, manufactured by ADEKA Corporation), and an antioxidant 2 (phosphite-based antioxidant, product name: ADEKA STAB PEP-36, manufactured by ADEKA Corporation) at a weight ratio of 33/67/0.1/0.1, by performing melt-kneading by using a co-rotating twin screw extruder with a screw diameter of 26 mm (set temperature: 200°C), a resin composition 7 was obtained. Evaluation results of the obtained resin composition 7 are shown in Table 1.

### [Comparative Example 1]

By applying the same setting as Example 1 except that 100 parts by weight of the phenoxy resin A were used and no polyester elastomer was blended, a resin composition 8 was obtained. Evaluation results thereof are shown in Table 2.

### [Comparative Example 2]

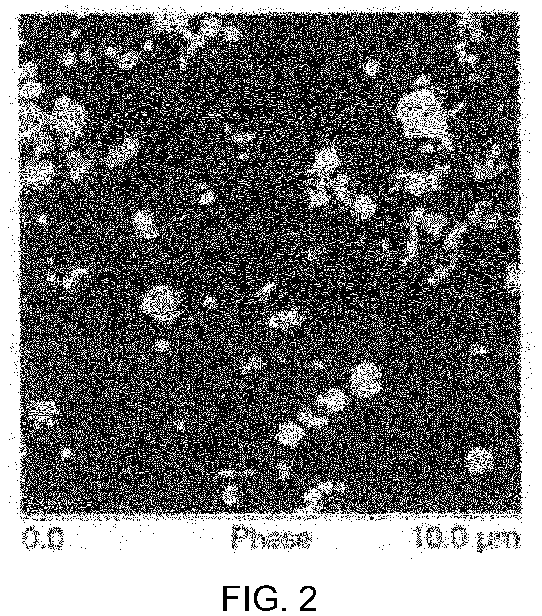

By applying the same setting as Example 1 except that 100 parts by weight of the polyester elastomer B were used and no phenoxy resin was blended, a resin composition 9 was obtained. Evaluation results thereof are shown in Table 2, and observation results of the elastic modulus phase image by AFM are shown in FIG. 2.

### [Comparative Example 3]

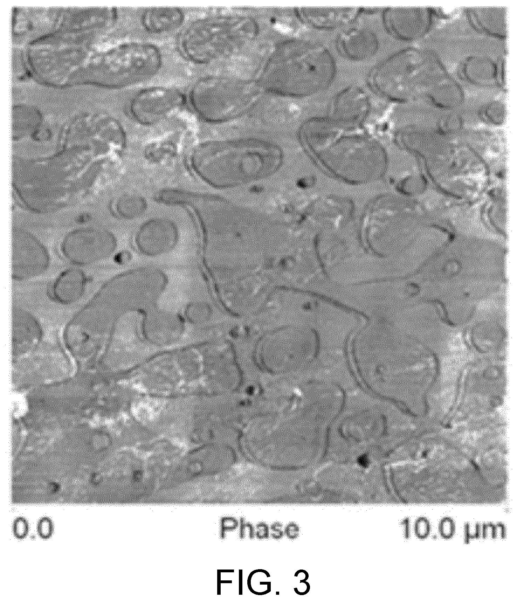

By applying the same setting as Example 1 except that the phenoxy resin A and polyethylene terephthalate (product name: NEH-2070, manufactured by Unitika Ltd., melting point 250°C) were set with a weight ratio of 50/50, a resin composition 10 was obtained. Evaluation results of the obtained resin composition 10 are shown in Table 2, and observation results of the elastic modulus phase image by AFM are shown in FIG. 3.

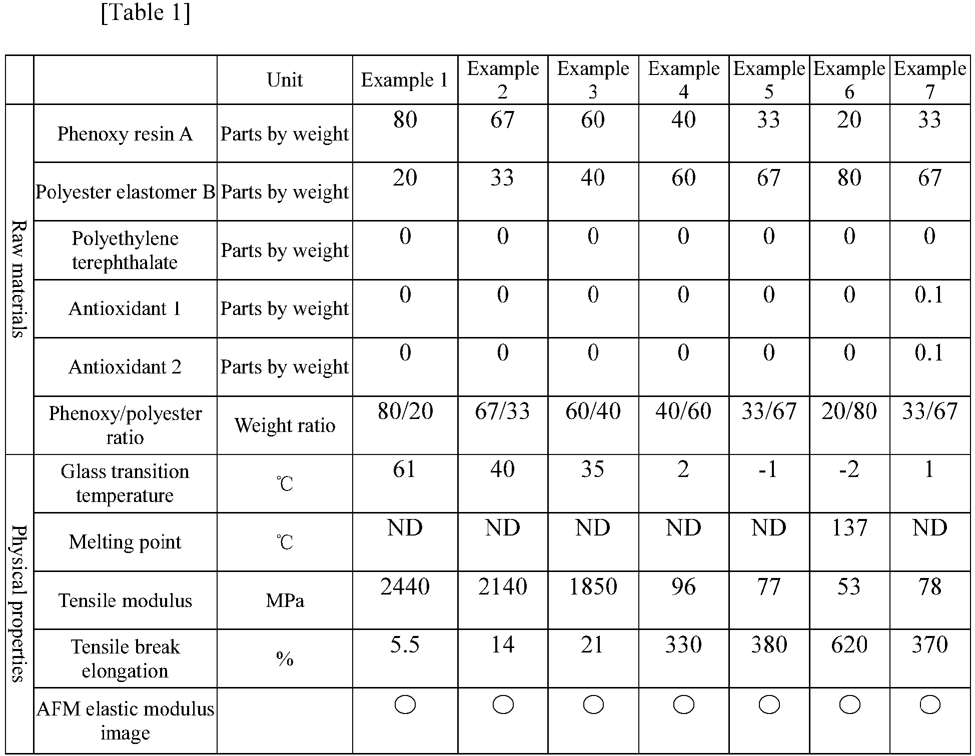

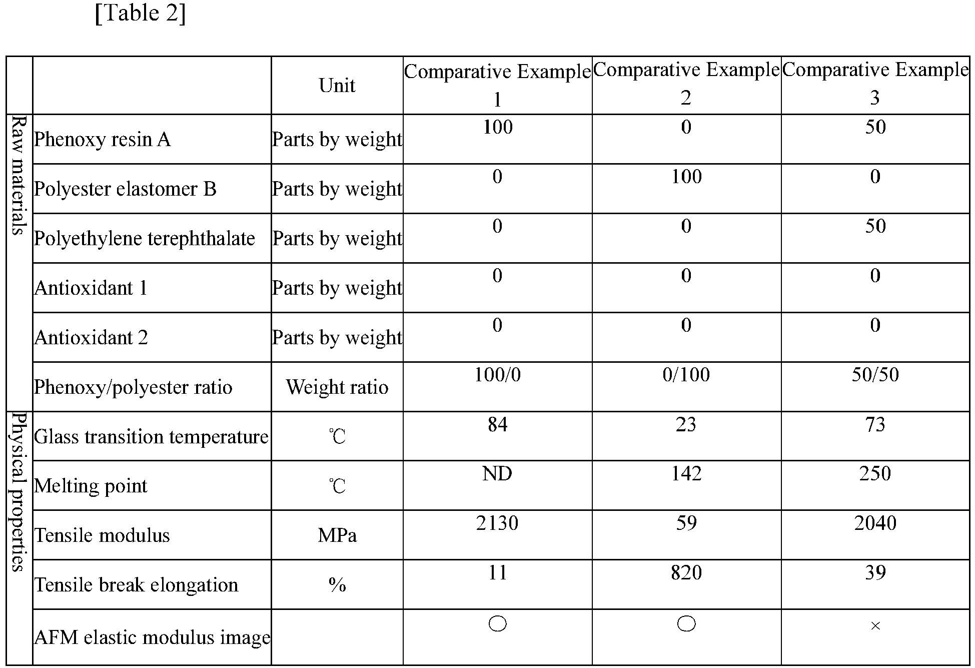

According to FIG. 2 (Comparative Example 2), it can be seen that the polyester elastomer B used in Examples and Comparative Examples, as a single component, contained a component presumed to be an additive other than the elastomer. It can be seen that, when observing FIG. 1 (Example 2) in which about 30% of the polyester elastomer B was mixed with about 70% of the phenoxy resin A, although a large amount of phenoxy resin was added, FIG. 1 was almost the same as FIG. 2 of the elastomer alone, and no phase separation structure caused by both the phenoxy resin A and the polyester elastomer B was observed. The white spots found in FIGs. 1 and 2 were components presumed to be the additives.

FIG. 3 (Comparative Example 3) illustrates an example in which, instead of the polyester elastomer, polyethylene terephthalate that is also a polyester-based resin was mixed with the phenoxy resin. It is known that, even though both the phenoxy resin and the polyethylene terephthalate are polyester-based resins, polyethylene terephthalate containing no soft segment (amorphous phase) that contains a polyether unit and/or a polyester unit in the structural unit exhibited low compatibility with phenoxy resin, and the phenoxy resin and the polyethylene terephthalate were separated from each other to cause phase separation.

In the following, the obtained resin compositions were formed into films.

### [Example 8]

An adhesive film having a thickness of 0.1 to 0.05 mm was prepared from the resin composition 1 by using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Example 9]

An adhesive film having a thickness of 0.1 to 0.05 mm was prepared from the resin composition 2 by using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Example 10]

An adhesive film having a thickness of 0.1 to 0.05 mm was prepared from the resin composition 3 by using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Example 11]

An adhesive film having a thickness of 0.1 to 0.05 mm was prepared from the resin composition 4 by using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Example 12]

An adhesive film having a thickness of 0.1 to 0.05 mm was prepared from the resin composition 5 by using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Example 13]

An adhesive film having a thickness of 0.1 to 0.05 mm was prepared from the resin composition 6 by using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Example 14]

An adhesive film having a thickness of 0.1 to 0.05 mm was prepared from the resin composition 7 by using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Comparative Example 4]

An adhesive film having a thickness of 0.1 to 0.05 mm was prepared from the resin composition 8 (the phenoxy resin A alone) using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Comparative Example 5]

An adhesive film having a thickness of 0.1 to 0.05 mm was prepared from the resin composition 9 (the polyester elastomer B alone) using a 37t automatic press machine. Molding conditions: Performing pressing for 3 minutes at 200 °C and 1 MPa, then performing degassing 3 times, performing pressing at 200 °C and 8 MPa for 5 minutes, and cooling to 60 °C with the pressurized state maintained.

### [Comparative Example 6]

An adhesive film having a thickness of 0.1 to 0.05 mm was prepared from the resin composition 10 by using a 37t automatic press machine. Molding conditions: Performing pressing for 3 minutes at 200 °C and 1 MPa, then performing degassing 3 times, performing pressing at 280 °C and 8 MPa for 5 minutes, and cooling to 60 °C with the pressurized state maintained.

### Then, adhesion structures using the obtained films were produced and evaluated.

### <Method for producing adhesion structure>

The adhesion structure was produced with reference to JIS K6850 and K6856 (test piece of Method A). A film cut in a size of 25 mm in width and 12.5 mm in length was placed on the tip of the dissimilar material (width: 25 mm; length: 100 mm; thickness: 1.6 mm or 1.5 mm), and the resin material (width: 25 mm; length: 100 mm; thickness: 2.0 mm) was overlapped thereupon. Accordingly, hot-pressing was performed under the conditions of Table 3 to produce the test piece.

**[Table 3]**

| Resin material | Dissimilar material | Hot-press condition |
|---|---|---|
| PC | SGCC | 160°C/2 MPa/5min |
| PET | SGCC | 180°C/2 MPa/5min |
| CF-Phenoxy | SGCC | 220°C/4 MPa/5min |
| GF-EP | SGCC | 220°C/4 MPa/5min |
| CF-PA6 | SGCC | 200°C/4 MPa/5min |

### The abbreviations in Table 3 are explained in the following:

### [Dissimilar material]

⊚ SGCC: Galvanized steel plate (manufactured by Standard Test Piece; width: 25 mm; length: 100 mm; thickness: 1.6 mm)

### [Resin material]

⊚ PC: Polycarbonate plate (manufactured by Standard Test Piece; width: 25 mm; length: 100 mm; thickness: 2.0 mm)
⊚ PET: Polyethylene terephthalate plate (manufactured by Standard Test Piece; width: 25 mm; length: 100 mm; thickness: 2.0 mm)

### CF-phenoxy: carbon fiber reinforced phenoxy resin plate

A phenoxy resin (product name: PhenoTohto YP50S, manufactured by Nippon Steel Chemical & Material Co., Ltd.) was freeze-pulverized and classified to prepare a powder having an average particle diameter D₅₀ of 80 µm. The powder was applied to perform powder coating on an opened carbon fiber fabric (Product name: SA-3203, manufactured by Sakai Ovex Co., Ltd. ) by using an electrostatic coating apparatus (Product name: GX8500, manufactured by Nihon Parkerizing Co., Ltd.). Then, a prepreg was produced by heat-welding in an oven at 240° C for 1 minute. The resin adhering amount was adjusted to 30 wt%. A predetermined number of the obtained prepregs were laminated, hot-pressed at 240 °C and 3 MPa for 5 minutes, and cooled to 50° C with the pressurized state being maintained, thereby producing a molded plate having a thickness of about 2.0 mm. By cutting the molded plate, a molded plate with a width of 25 mm, a length of 100 mm and a thickness of 2.0 mm was obtained.
⊚ GF-EP: Glass fiber reinforced epoxy resin plate (epoxy glass, manufactured by Standard Test Piece; width: 25 mm; length: 100 mm; thickness: 2.0 mm)
⊚ CF-PA6: Carbon fiber reinforced nylon 6 plate (product name: TEPEX202-C200 (9) / 50%, manufactured by Sanwa Trading Co., Ltd.; width: 25 mm; length: 100 mm; thickness: 2.0 mm)

### <Adhesion structure evaluation results>

The evaluation results of the obtained adhesion structures are as shown in Tables 4 to 6. The case where an adhesion structure cannot be produced (that is, cannot adhered) was evaluated as x (defective).

**[Table 4]**

| | Unit | Evaluation | Evaluation | Evaluation | Evaluation | Evaluation | Evaluation | Evaluation | Evaluation |
|---|---|---|---|---|---|---|---|---|---|
| | | Example 1 | Example 2 | Example 3 | Example 4 | Example 5 | Example 6 | Example 7 | Example 8 |
| Resin material | | PC | PC | PC | PC | PC | PC | PC | PET |
| Film | | Example 8 | Example 9 | Example 10 | Example 11 | Example 12 | Example 13 | Example 14 | Example 14 |
| Dissimilar material | | SGCC | SGCC | SGCC | SGCC | SGCC | SGCC | SGCC | SGCC |
| Tensile shear adhesive strength | MPa | 8.1 | 8.0 | 7.7 | 7.6 | 7.3 | 6.8 | 7.5 | 4.2 |
| Flexural adhesive strength | MPa | 0.25 | 0.37 | 0.36 | 0.40 | 0.44 | 0.41 | 0.35 | 0.35 |

### According to Evaluation Examples 1 to 8, it is known that the adhesion structure using the adhesive film of the invention exhibits both tensile shear adhesive strength and flexural adhesive strength.

**[Table 5]**

| | Unit | Evaluation Example 9 | Evaluation Example 10 | Evaluation Example 11 | Evaluation Example 12 |
|---|---|---|---|---|---|
| Resin material | | PC | PC | PC | PC |
| Film | | none | Comparative Example 4 | Comparative Example 5 | Comparative Example 6 |
| Dissimilar material | | SGCC | SGCC | SGCC | SGCC |
| Tensile shear adhesive strength | MPa | × | 7.8 | 4.6 | × |
| Flexural adhesive strength | MPa | × | 0.06 | 0.37 | × |

### In the case where an adhesive film was not used as in Evaluation Example 9, an adhesion structure cannot be produced. In the case where a film of phenoxy resin or polyester elastomer alone was used as in Evaluation Examples 10 and 11, either the shear adhesive strength or the flexural adhesive strength was low. Also, in the case where an adhesive film in which polyethylene terephthalate that is also a polyester-based resin was used in place of the polyester elastomer, an adhesion structure cannot be produced (Evaluation Example 12).

**[Table 6]**

| | Unit | Evaluation Example | Evaluation Example | Evaluation Example | Evaluation Example | Evaluation Example | Evaluation Example | Evaluation Example |
|---|---|---|---|---|---|---|---|---|
| | | 13 | 14 | 15 | 16 | 17 | 18 | 19 |
| Resin material | | CF-Phenoxy | GF-EP | CF-Phenoxy | GF-EP | CF-Phenoxy | GF-EP | CF-PA6 |
| Film | | Example 9 | Example 9 | Example 12 | Example 12 | Example 14 | Example 14 | Example 14 |
| Dissimilar material | | SGCC | SGCC | SGCC | SGCC | SGCC | SGCC | SGCC |
| Tensile shear adhesive strength | MPa | 22.2 | 20.1 | 15.2 | 13.1 | 15.5 | 13.3 | 4.2 |
| Flexural adhesive strength | MPa | 3.74 | 2.03 | 2.03 | 1.66 | 1.99 | 1.55 | 1.03 |

According to Evaluation Examples 13 to 19, it is confirmed that when the adhesive film of the invention was used, a particularly favorable adhesive property to a fiber-reinforced resin material was exhibited.

The evaluation results indicate that by using the adhesive resin composition and the adhesive film of the invention, it is possible to obtain an adhesion structure that is strong against forces sheering and peeling the resin material and the dissimilar material such as a metal material.

Although the embodiments of the invention have been described above in detail for the purpose of illustration, the invention is not limited to the above embodiments, and various modifications are possible.

This application claims priority based on Japanese Patent Application No. 2020-119615 filed in Japan on July 13, 2020, and the entire contents of this application are incorporated herein.

## Claims

1. An adhesive resin composition for adhering two adherends, the adhesive resin composition comprising a phenoxy resin and a polyester elastomer at a weight ratio ranging from 20:80 to 80:20 between the phenoxy resin and the polyester elastomer,
wherein an area of portions where solid matter of the adhesive resin composition forms a phase separation structure attributed to both of the phenoxy resin and the polyester elastomer is 1 area% or less of an entire observation area in an elastic modulus phase image of a plurality of arbitrarily defined 10-µm square regions observed by an atomic force microscope (AFM) to which a probe having a tip radius of curvature of 10 nm is attached at 25°C.

2. The adhesive resin composition as claimed in claim 1, wherein the solid matter of the adhesive resin composition satisfies (a) to (c) as follows:
(a) a glass transition temperature of 60°C or lower;
(b) a tensile modulus of 2500 MPa or less; and
(c) a tensile break elongation of 5% or more.

3. The adhesive resin composition as claimed in claim 1 or 2, wherein the phenoxy resin is a phenoxy resin that is amorphous and has a bisphenol A skeleton having a glass transition temperature of 120 °C or lower, and
the polyester elastomer is a polyester elastomer having a melting point of 180°C or less.

4. The adhesive resin composition as claimed in any one of claims 1 to 3, wherein one of the two adherends is a resin material, and an other of the two adherends is a metal material.

5. An adhesive film consisting of the adhesive resin composition as claimed in any one of claims 1 to 4.
